## Europäisches Patentamt
## European Patent Office
## Office européen des brevets

(19)

(11) Publication number: **0 081 015**
**B1**

(12)

# EUROPEAN PATENT SPECIFICATION

(45) Date of publication of patent specification: **08.10.86**

(21) Application number: **81305750.2**

(22) Date of filing: **04.12.81**

(51) Int. Cl.⁴: **C 08 F 279/02** // (C08F279/02, 212:00, 222:00)

(54) Improved heat resistant high impact polymer compositions and method of making same.

(43) Date of publication of application:
**15.06.83 Bulletin 83/24**

(45) Publication of the grant of the patent:
**08.10.86 Bulletin 86/41**

(84) Designated Contracting States:
**BE DE FR GB NL**

(56) References cited:
**EP-A-0 021 488**
**FR-A-1 597 749**
**GB-A-1 143 157**
**US-A-3 919 354**

(73) Proprietor: **ATLANTIC RICHFIELD COMPANY**
**515 South Flower Street**
**Los Angeles California 90071 (US)**

(72) Inventor: **Lordi, Frank Eugene**
**1344 Hollyberry Lane**
**West Chester, PA 19380 (US)**
Inventor: **Triplett, Jacob**
**1121 Stoneybrook Lane**
**West Chester, PA 19380 (US)**

(74) Representative: **Cropp, John Anthony David et al**
**MATHYS & SQUIRE 10 Fleet Street**
**London, EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 081 015

**Description**

It is known to make rubber-modified styrene/maleic anhydride copolymers by dissolving a rubbery additive in the monomer mixture and copolymerizing. Generally, the rubbery additives are soluble in the vinyl aromatic monomer or in the mixture of monomers. However, in the past the addition of as much as about 16 or 17% by weight of the total copolymer of rubber is all that can be tolerated in a commercial-type reactor due to the high viscosity of the monomers when admixed with a rubbery additive.

The blending of rubbery additives to a styrene/maleic anhydride copolymer or to a rubbery modified copolymer is also known. U.S. patents 4,097,550, 4,097,551, 3,641,212 and 2,914,505 all relate to the improvement of thermoplastic compositions by rubbery additive admixtures but all of these patents teach the blending of the rubbery additives with the copolymer.

U.S.P. 3,919,354, issued November 11, 1975, shows the making of a rubber-modified styrene/maleic anhydride copolymer having impact resistance and that is prepared by providing a solution of the rubber in styrene, initiating free radical polymerization and then adding maleic anhydride at a rate substantially less than the rate of polymerization of the styrene. However, this patent does not teach or achieve the product or improvement obtained by the present invention, nor the improvements in the process of making such improved product. Further, the patent states that the non-equimolar random copolymers are obtainable preferably by the steps described in the patent as set forth above. In fact, the patent states that a polymer prepared from 75 mole percent styrene and 25 mole percent maleic anhydride by admixing the monomers with suitable diluent and catalyst and heating until polymerization is about complete, will yield a polymer or polymer mixture which is *not* suitable for the practice of the invention.

It has been discovered by the present invention that when two different rubbery additives are used and are present during the polymerization of the copolymer, a striking phenomenon occurs. As the copolymerization occurs, a lower viscosity of the complete mixture is evident, the process may thus be more readily carried out with a marked decrease in the energy requirements. Secondly, an improved product is made in that not only is heat resistance improved, but, in addition, impact strength is significantly improved and the product is upgraded to the quality of the so-called engineering materials which are considered specialty products with a correspondingly high price.

The surprising discovery of using at least two rubbery additives and having the same present during the polymerization of the copolymer allows the permissible amount of rubbery additives to be greatly increased and this in turn correspondingly improves the impact properties of the resulting product. As an additional feature, it has been found that the processability of the resultant product, as well as its glossy surface appearance, is greatly improved.

According to the present invention, there is provided a thermoplastic rubber-modified vinyl aromatic polymer composition useful for molding, extrusion and thermoforming and obtained by forming a copolymer of a vinyl aromatic monomer and an ethylenically unsaturated dicarboxylic acid moiety copolymerizable therewith in the presence of rubbery material characterised in that the composition comprises:

(1) from 60 to 93% by weight of a non-equimolar copolymer of 70 to 98% by weight of said vinyl aromatic monomer and from 2 to 30% by weight of ethylenically unsaturated dicarboxylic acid, or anhydride or imide thereof, and

(2) from 7 to 40% by weight of said rubbery material comprising from 5 to 20% by weight, based on the total composition, of at least one high conjugated diene-vinyl aromatic monomer first copolymer comprising 60 to 98% by weight of conjugated diene, and 2 to 20% by weight, based on the total composition, of at least one high vinyl aromatic monomer-conjugated diene second copolymer which is a block copolymer containing a greater amount of vinyl aromatic monomer than conjugated diene monomer.

The invention also provides a method of making a thermoplastic composition useful for molding, extrusion and thermoforming by polymerizing an aromatic vinyl monomer and an ethylenically unsaturated dicarboxylic acid, or anhydride or imide thereof, to form a non-equimolar copolymer in the presence of rubbery material characterised in that said rubbery material comprises 5 to 20% by weight, based on total composition, of a first additive comprising at least one high conjugated diene-vinyl aromatic monomer copolymer comprising 60 to 98% by weight of conjugated diene and 2 to 20% by weight, based on total composition, of a second additive comprising at least one high vinyl aromatic monomer-conjugated diene copolymer which is a block copolymer containing a greater amount of vinyl aromatic monomer than conjugated diene monomer.

It is essential to the present invention that the rubbery additives are present at the time of polymerization of the base copolymer resin. It is believed that (1) greater dispersion of the rubbery additives is thereby achieved and (2) an interaction of the rubbery additives reduces the particle size of the resultant rubber particles precipitated during polymerization of the base resin copolymer or matrix to provide the improved results. It is known that the resultant product of the present process possesses high heat resistance, considerably increased impact strength and improved processability during fabrication. For example, in thermoforming, higher draw depths at increased temperatures are permissible. The final products exhibits higher draw depths (elongation) before detecting a minimal five pound force on the test instrument and at the break point, especially at elevated temperatures and in comparison to a

2

non-modified styrene copolymer. The end product also has a glossier finish, believed attributable to the finer size rubbery additive particles.

The rubbery additives employed in the present invention are generally soluble in the vinyl aromatic compound. It is essential for the achievement of the results of the present invention that the rubbery additives are present during polymerization of the base resin copolymer or matrix. As will be further explained later, blends of the same ingredients even as intimately blended as melt blends do not provide the results obtainable by the practice of the present invention.

### The dicarboxylic acid moiety

The ethylenically unsaturated dicarboxylic acid moiety may be an acid itself, its anhydride, its imide or substituted imide or a mixture thereof. Suitable acids and their derivatives useful in the present invention are maleic acid, fumaric acid, itaconic acid, citraconic acid, mesaconic acid, ethylmaleic acid, methyl itaconic acid, chloromaleic acid, dichloromaleic acid, bromomaleic acid, dibromomaleic acid, and phenylmaleic acid, the anhydrides of these acids, the imides and N-substituted imides of these acids.

The imide derivatives may be prepared by reacting the starting anhydride or diacid copolymers with aqueous ammonia or amines. Suitable amines are the alkyl amines having 1 to 4 carbon atoms, such as, methylamine, ethylamine, propylamine, isopropylamine and butylamine; ethanolamine; aniline, benzylamine, allylamine and the like. Also suitable are the water soluble $\alpha, \omega$-alkylenediamines having 2 to 6 carbon atoms in the alkylene group, such as ethylenediamine, and hexamethylenediamine. Arylene diamines such as phenylene diamines and benzidines may also be used. The diamines are useful for preparing copolymers having varying degrees of crosslinking. These diamines may be used alone or in combination with other monoamines to give varying degrees of crosslinking.

### The vinyl aromatic compounds

Suitable vinyl aromatic comonomers include styrene, alpha-methylstyrene, nuclear methylstyrenes, ethylstyrene, isopropylstyrene, tert-butylstyrene, chlorostyrenes, dichlorostyrenes, vinylnaphthalene and mixtures of these.

### High diene-styrenic rubbery additives

Rubbery additives suitable for use as the high conjugated diene-vinyl aromatic monomer copolymer will contain 60 to 98% by weight of conjugated diene copolymerised with vinyl aromatic monomer. Examples include graded block copolymer rubbers and A—B block copolymer rubbers containing 70 to 95% by weight of butadiene and 5 to 30% by weight of styrene.

The diene block copolymer rubbers suitable for the present invention are block copolymers of vinyl aromatic compounds and conjugated dienes wherein the blocks of conjugated dienes will have average molecular weights greater than the molecular weight of the combined blocks of vinyl aromatic compounds.

These block copolymers will generally be 2 to 40% by weight vinyl aromatic compound and 60 to 98% by weight conjugated diene. Preferably, the vinyl content will be 10 to 40% with the diene content of 60 to 90%. The vinyl aromatic compounds may be styrene, alpha methylstyrene, nuclear methylstyrenes, ethylstyrene, isopropylstyrene, tert-butylstyrene, chlorostyrenes, dichlorostyrenes and vinyl naphthalene and the like. The preferred compound is styrene.

The conjugated diene may be butadiene, isoprene, chloroprene and piperylene. The preferred dienes are butadiene and isoprene.

Suitable block copolymer rubbers are the graded block, A—B diblock, the radial or star block, A—B—A triblock and the A—B—A hydrogenated triblock rubbers.

All of the block copolymer rubbers can be made by known processes involving anionic initiators such as butyl lithium.

Graded diblock rubbers are those A—B type block copolymers in which each A block is essentially polymerized vinyl aromatic monomer with a minor amount of a conjugated diene, and each B block is essentially a conjugated diene polymer with a minor amount of vinyl aromatic monomer. Such graded block rubbers may be prepared by polymerizing a mixture of the vinyl aromatic monomer and the diene in a neutral solvent, such as n-hexane, using a sec-butyl lithium catalyst. In this type of system, the initial polymer chains are predominantly polydiene, but as the diene is depleted, the later polymer formed is predominantly polyvinyl aromatic monomer. Such copolymer rubbers are also available commercially, as for instance Stereon 720, a Firestone Synthetic Rubber & Latex Co. product having 90% by weight butadiene and 10% by weight styrene with 55% by weight of the styrene appearing as polystyrene blocks.

Diblock copolymer rubbers are copolymers of A—B type wherein A represents a block of poly(vinyl aromatic monomer) and B represents a block of poly(conjugated diene). True diblock copolymer rubbers are made by polymerizing one of the monomers to essential completion and then adding the second monomer. Thus, butadiene may be anionically polymerized using sec-butyl lithium catalyst. Then, prior to termination of the polymer chains, the styrene is added and polymerization allowed to continue. Diblock copolymers may also be prepared by separately polymerizing each monomer in the presence of a lithium catalyst and then combining the separate blocks by reacting the lithium terminated blocks together in the presence of a difunctional coupling agent. Such di- block rubbers are also available commercially, as for instance Solprene 1205, a Phillips Petroleum Company product having 75% by weight polybutadiene and 25% by weight polystyrene.

Radial or star block copolymer rubbers are branched copolymers having at least three A—B diblock chains connected to a central nucleus. Thus, chains of block copolymers prepared by polymerizing vinyl aromatic monomers and conjugated diene monomers in inert solvents using organo-lithium catalysts can be added, while still lithium terminated, to compounds having at least three functional sites capable of reacting with the lithium to carbon bond and adding to the carbon possessing this bond in the copolymer. Such polyfunctional compounds are, for example, polyepoxides, polyisocyanates, polyimines, polyaldehydes, polyketones, polyanhydrides, polyesters, etc. Such radial block rubbers are also available commercially, as for instance Solprene 406 and Solprene 414 products of Phillips Petroleum Co. having 60% by weight polybutadiene and 40% by weight polystyrene. Another example is Solprene S411P, containing 70% butadiene, 30% styrene and a coupling agent.

Triblock copolymer rubbers are linear copolymers of the A—B—A or B—A—B type, wherein, again, A represents a block of poly(vinyl aromatic monomer) and B represents a block of poly(conjugated diene). Such triblock copolymers can be prepared by sequential addition of the desired monomers into a lithium alkyl initiated polymerization. Another effective method would be to polymerize the diene monomer, for example, in the presence of a difunctional catalyst, such as dilithiostilbene, and then adding the vinyl aryl monomer to form the end blocks. Such triblock copolymer rubbers are also available commercially as, for example, Kraton 1101, a product of Shell Chemical Co. being a polystyrene-polybutadiene-polystyrene triblock rubber having 70% by weight polybutadiene and 30% by weight polystyrene.

Also suitable are the hydrogenated triblock copolymer rubbers formed by, for example, selective hydrogenation of A—B—A triblock type copolymers. Especially suitable are the hydrogenated triblock copolymer rubbers wherein the hydrogenation has been primarily in the polydiene blocks, B. Thus, U.S. Patent No. 3,595,942 describes the polymers and suitable methods for their hydrogenation such that at least 80% of the aliphatic unsaturation has been reduced by hydrogenation and less than 25% of the aromatic unsaturation of the vinyl aromatic monomer blocks, A, have been hydrogenated. Such copolymers are available commercially as, for example, Kraton G, a product of Shell Chemical Co., being a polystyrene-polyisoprene-polystyrene triblock rubber wherein the polyisoprene portion has been hydrogenated to a poly(ethylene/propylene) copolymer block.

High vinyl aromatic rubbery additives

Although the high monovinyl aromatic copolymers are not strictly "rubbery", they are designated as rubbery additives herein because of the effect their addition to the present system has on the impact and thermal properties.

Any of the types of block copolymers described above under High Diene Rubbery Additives can be prepared using greater amounts of vinyl aromatic monomer than conjugated diene in the described procedures.

A suitable high vinyl aromatic rubbery additive is a radial block copolymer of 75% by weight styrene and 25% by weight butadiene, sold by Shell Chemical Co. under the tradename KR03.

Branched, radial block copolymers, which are also suitable for the present invention, can be prepared using the methods taught in U.S. patent 4,180,530.

The polymerization of the base resin copolymer may be accomplished by any of the several available methods for the preparation of the non-equimolar copolymers of vinyl aromatic compounds and dicarboxylic acid moieties. They may be prepared in accordance with the principles of the continuous recycle polymerization process such as described in U.S. patents nos. 2,769,804 and 2,989,517; or by the suspension polymerization process described in U.S. patent no. 3,509,110. A continuous polymerization process is preferred (even though recycling is only done after purification of the materials), because it appears to lend itself to the advantages of the present invention, such as, the possibility of the increase of greater rubber content and the energy conservation potential discovered in carrying out the present invention.

For example, in a continuous polymerization process there are inherent limitations in that if more than about 15 to 17% by weight of finished product of a rubbery additive is used, the viscosity of the total mix or syrup becomes so high that agitation and continued polymerization cannot be accomplished.

According to the present invention, when a total of 20% of at least two different rubbery additives are present during polymerization, it is found that when polymerization reaches a point where the syrup contains about 45% or so solids, the viscosity, which at the start of polymerization was 195 mPa.s is only 4,870 mPa.s compared to a syrup containing only 15% of one rubber additive which starts with a viscosity of about 95 mPa.s and progresses to where, at the level of 45% or so solids, the viscosity is about 17,430 mPa.s.

This remarkable decrease in viscosity cannot be fully explained but may be accounted for by the fact that the rubber particles precipitating out of the syrup as polymerization proceeds have a much finer particle size than when a single rubber additive is used.

Similarly, in producing compositions in accordance with the present invention, the amperage required at a point near the end of polymerization to drive the agitators decreased from 64 to 66 amperes for a copolymer containing enough of a rubber additive to provide 15% by weight of the final product to about

**0 081 015**

60 to 62 amperes for a final product containing 17% of one rubbery additive and 5% of a different rubbery additive for a total 22% rubbery additive.

In another instance a composition containing 15% of one rubber and 10% of another rubber or a total of 25% rubber only required 59 to 62 amperes at a point near the end of polymerization in contrast to the 64 to 66 amps for a composition containing 15% of a single rubbery additive. On another production line, the composition containing 15% of a single rubber required 70 to 72 amperes to drive the agitator at the time of final polymerization in contrast to a composition containing 17% of one rubber and 5% of another rubber (or a total of 22% rubber) which required only 61-1/2 to 62 amperes. When production planning requires consideration of energy conservation, it is highly advantageous to make a better product while using considerably less energy.

To illustrate the advantages of the present invention over melt blended compositions of the same ingredients, that is, a copolymer of a vinyl aromatic compound and an ethylenically unsaturated dicarboxylic acid moiety with a rubbery additive, the following Example I is provided.

Example I

Sample A comprises a composition containing styrene in an amount of about 77%, maleic anhydride in an amount of about 8%, a Stereon 720, a rubbery additive, in an amount of about 15% but which has been polymerized together with the styrene and maleic anhydride.

Sample B comprises Sample A to which has been melt blended the rubbery additive sold under the trademark KR03, in an amount to form 5% by weight of the total composition.

Sample C is as Sample B by wherein the KR03 has been used in an amount to form 10% by weight of the total composition.

Sample D is as Sample B except that the KR03 has been used in an amount to form 20% by weight of the total composition.

Table I shows the physical properties of Samples A through D. The use of two rubbery additives does add some slight improvement to the impact properties.

TABLE I

| Sample | A | B | C | D |
|---|---|---|---|---|
| Izod Impact, notched (ASTM D-256) | | | | |
| (ft.-lbs./inch. | 3.2 | 3.4 | 3.5 | 3.7) |
| cm-kg/cm | 17.4 | 18.5 | 19.1 | 20.2 |
| Falling Weight Impact, | | | | |
| (inch lbs. | 302 | 362 | 356 | 442) |
| cm kg | 347 | 416 | 409 | 508 |
| Gardner Impact, | | | | |
| (inch lbs. | 98 | 128 | 129 | 112) |
| cm kg | 113 | 147 | 148 | 129 |
| Vicat Softening Pt. (ASTM D-1525) | | | | |
| °C | 119 | 118 | 117 | 116 |
| (°F | 246 | 244 | 243 | 241) |
| Tens. Strength, (psi | 4,100 | 4,500 | 4,200 | 4,300) |
| (ASTM D-638) kg/cm$^2$ | 289 | 317 | 296 | 303 |
| Flex. Strength, (psi | 9,100 | 8,200 | 7,700 | 7,500) |
| (ASTM D-790) kg/cm$^2$ | 641 | 577 | 542 | 528 |
| Flex. Modulus (ASTM D-790) | | | | |
| (psi×10$^{-3}$ | 326 | 327 | 309 | 294) |
| kg/cm$^2$×10$^{-3}$ | 23 | 23 | 22 | 21 |

Example II shows the advantages of polymerisation of the copolymer base resin in the presence of the rubbery additives and the improvement in properties achieved in contrast to intimate mixing of the rubbery additives by blending as shown in Example I.

Example II

Sample A duplicates Sample A as shown in Example I and comprises a base copolymer which has been polymerized in the presence of a rubbery additive (Stereon 720) in sufficient quantity to provide an end product with 15% by weight of rubbery additive. This represents a control sample.

5

Sample E is a sample with the same composition as Sample A made from a different run, and also represents another control sample.

Sample F is a sample in which two different rubbery additives were present during polymerization of the base copolymer resin in amounts sufficient to provide an end product having 15% Stereon 720 and 5% KR03.

Table II sets forth the physical property data of the Samples A, E and F. It can be seen that the samples having at least two rubbery additives present during polymerization gives significantly better properties than the samples which were melt blended in Table I.

TABLE II

| Sample | A | E | F |
|---|---|---|---|
| Izod Impact, notched 23°C (73°F) (ASTM D-256) | | | |
| (ft. lbs./in. | 3.2 | 2.5—2.9 | 4.0) |
| cm. kg/cm | 17.4 | 13.6—15.8 | 21.8 |
| Falling Weight Impact, | | | |
| (inch lbs.* | 302 | 225 | 500) |
| cm kg | 347 | 259 | 575 |
| Gardner Impact, | | | |
| (inch lbs. | 98 | 50 | 122) |
| cm kg | 113 | 56 | 140 |
| Vicat Softening Point (ASTM D-1525) | | | |
| °C | 119 | 116 | 117 |
| (°F | 246 | 241 | 243) |
| Tensile Strength, (psi | 4,100 | 4,600 | 4,800) |
| (ASTM D-638) kg/cm² | 289 | 324 | 338 |
| Flexural Strength, (psi | 9,100 | 8,700 | 8,500) |
| (ASTM D-790) kg/cm² | 641 | 613 | 599 |
| Flexural Modulus, (psi | 326,000 | 330,000 | 320,000) |
| (ASTM D-790) kg/cm² | 22,960 | 23,240 | 22,540 |

* See text following

In Tables I and II the Falling Weight Impact Test is one devised by ARCO Polymers, Inc. It involves falling weights of from 0.45 kg to 4.54 kg (one to ten pounds) each having a 19 mm (¾") radius on the nose and a 38.1 mm (1.5") diameter body. Test specimens are flat sheets having a thickness of 1.6 mm×6.4 mm (0.0625" to .250") and are a minimum area of 232 square cm (36 square inches); 15.2 cm×15.2 cm (6"×6") plaques. The specimens are injection molded, compression molded or extruded sheets, and are tested at an ambient temperature of about 23°C (73°F). The test procedure comprises selecting an appropriate weight and height at which 50% failure of the test specimens should occur. This will depend on the thickness and type of material being tested. The selected weight is raised to the desired height and allowed to fall freely onto the testing area. The testing area comprises a 102 mm (4") hole in the base of the test apparatus over which a test specimen plaque has been disposed and clamped. Care should be taken to avoid multiple impacts; that is, if the striking weight should bounce off the test specimen, the operator should catch it to prevent it from striking the test specimen a second time. The previous steps are repeated for the remaining plurality test specimens in conformance with a dropping procedure known as the Bruceton Staircase Method in which a drop height is raised 25.4 mm (one inch) after a non-failure and lowered 25.4 mm (one inch) after a failure. This gives results which have a large number of failures of data points near the $F_{50}$ or mean value. The mean height of the specimens that fail and those that do not fail is calculated using the following formula:

$$mean = \frac{\Sigma I \ N_I}{N},$$

in which

N = the total number of specimens that failed or did not fail,
I = drop height, and
$N_I$ = the number of specimens that failed or did not fail at height I.

6

The two means (failure and non-failure) are then averaged to produce the $F_{50}$ or mean failure height which multiplied by the striker weight used gives the falling weight impact. An adequate number of test specimens, such as, 30 or more, should be used to provide accurate, meaningful results.

Example III

In this Example varying amounts of rubbery additive KR03 with a constant amount of rubbery additive Stereon 720 were prepared and tested as Samples I through M. The rubbery additive content and physical properties of the resultant products are shown in the following Table III.

TABLE III

| Sample | I | J | K | L | M |
|---|---|---|---|---|---|
| Stereon 720 wt.% | 15 | 15 | 15 | 15 | 15 |
| KR03 wt.% | 0 | 2 | 4 | 5 | 7 |
| Total of 2 Rubbery Additives wt.% | 15 | 17 | 19 | 20 | 22 |
| Izod Impact, (ft. lbs./in. | 3.4 | 4.0 | 4.0 | 4.9 | 4.7) |
| cm.kg/cm | 18.5 | 21.8 | 21.8 | 26.7 | 25.6 |
| Falling Weight Impact, (inch lbs. | 300±8 | 407±90 | 467±19 | 493±15 | 517±26) |
| (ARCO Polymer's test) cm kg | 345±9 | 468±104 | 537±22 | 567±17 | 595±30 |
| Vicat, (ASTM D-1525) | | | | | |
| °C | 119 | 115 | 116 | 119 | 119 |
| (°F | 246 | 239 | 241 | 246 | 246) |
| Tensile Strength (psi | 4,400 | 4,100 | 4,700 | 4,900 | 4,600) |
| kg/cm$^2$ | 310 | 289 | 331 | 345 | 324 |
| Flexural Strength, (psi | 8,300 | 7,500 | 8,500 | 8,600 | 7,900) |
| kg/cm$^2$ | 585 | 528 | 599 | 607 | 556 |
| Flexural Modulus, (psi | 341,000 | 327,000 | 336,000 | 340,000 | 329,000) |
| kg/cm$^2$ | 24,010 | 23,030 | 23,660 | 23,940 | 23,170 |

From Table III it may be seen that in contrast to Sample I, the progressive presence of amounts of 2, 4, 5 and 7% of rubbery additive KR03 gave higher impact strengths without significantly affecting the temperature resistance or other physical properties of the products. The use of total rubbery additive contents of 20% and 22% using two different rubbers showed falling weight impact improvements of 64% and 72% respectively over the product containing 15% of a single rubbery additive. This is especially significant when it is realized that rubbery additive KR03 by itself has a relatively low impact strength. The fact that the product has increased ease of formability is an additional important beneficial factor for its commercial use.

Preliminary testing shows that products embodying the present invention that include the use of more than two rubbery additives, such as, 3 or 4, or more may further dramatically contribute to better products, especially when the additives are carefully selected to provide special properties for predetermined applications. From the experimental testing, it is concluded that the total rubbery additive content by weight of the base resin matrix may be as much as 40%, and still provide the impact strength improvements illustrated by the Examples set forth herein. Electron micrographs of the finished product shows that the size of the rubbery additive particles precipitated from the base resin during its polymerization are materially smaller when at least two rubbery additives are used. It is postulated that there is an interaction that occurs when at least two rubbery additives are used that accounts for the precipitation of the significantly smaller rubber particles, their greater dispersement through the matrix, and the greatly improved impact resistance of the resultant product. It is also believed that this same phenomenon accounts for the higher glosss of the surface of articles fabricated from the resultant product.

Products made in accordance with the present invention are also compatible with reinforcement additives, such as, glass fibers or other additives for this purpose that are well known in the art. In one instance, the use of 10% glass fibers raised the tensile strength from a range of about 280 to 350 kg/cm$^2$ (4,000 to 5,000 psi) to about 560 kg/cm$^2$ (8,000 psi) flexural strength was raised from the range of about 490 to 630 kg/cm$^2$ (7,000 to 9,000 psi) to about 920 to 990 kg/cm$^2$ (13,000 to 14,000 psi) and flexural modulus was improved from the range of about 21000 to 25000 kg/cm$^2$ (300,000 to 350,000 psi) to about 34600 kg/cm$^2$ (492,000 psi). When glass fibers in the amount of 20% were added, the tensile strengths reached about 700 to 770 kg/cm² (10,000 or 11,000 psi) flexural strengths attained about 1270 kg/cm² (18,000 psi) and flexural modulus attained about 50000 kg/cm² (714,000 psi).

As previously described, the preferred base resin or copolymer composition comprises an aromatic vinyl monomer and an ethylenically unsaturated dicarboxylic acid moiety. The proportions of these two ingredients may be varied, according to the degree of heat resistance desired. Thus, the proportion of the dicarboxylic acid moiety may be varied from a minimum amount sufficient to provide a significant amount of increased heat resistance to a maximum of 25% or more. At amounts of about 25% or 30% or even slightly less, the impact increasing propensity of the multiple rubbery additives during polymerization is believed to decrease. In other words, the beneficial effects on improvement or the impact strength are proportionally decreased. This brings into play the economics of the final product and whether the cost of such a final product will be compatible or competitive with other available different materials. At some point the final product with high dicarboxylic acid moiety content and high total rubbery additive content may be deficient in one or more specific physical properties desired for certain end use applications.

It is also contemplated by the present invention that in addition to reinforcing agents, the products may also contain colorants, fire retardant agents, plasticisers, extenders, lubricants, oxidation inhibitors, stabilisers, and the like, provided they are compatible with the ingredients being used and do not distort the usefulness of such final products to an unsatisfactory degree.

One or more of the following trade names used in this specification may be registered trade marks in one or more of the territories designated in this application:
"KRATON", "STEREON" and "SOLPRENE"

**Claims**

1. A thermoplastic rubber-modified vinyl aromatic polymer composition useful for molding, extrusion and thermoforming and obtained by forming a copolymer of a vinyl aromatic monomer and an ethylenically unsaturated dicarboxylic acid moiety copolymerizable therewith in the presence of rubbery material characterised in that the composition comprises:
(1) from 60 to 93% by weight of a non-equimolar copolymer of 70 to 98% by weight of said vinyl aromatic monomer and from 2 to 30% by weight of ethylenically unsaturated dicarboxylic acid, or anhydride or imide thereof, and
(2) from 7 to 40% by weight of said rubbery material comprising from 5 to 20% by weight, based on the total composition, of at least one high conjugated diene-vinyl aromatic monomer first copolymer comprising 60 to 98% by weight of conjugated diene, and 2 to 20% by weight, based on the total composition, of at least one high vinyl aromatic monomer-conjugated diene second copolymer which is a block copolymer containing a greater amount of vinyl aromatic monomer than conjugated diene monomer.

2. A composition as claimed in Claim 1 characterised in that the rubbery additives generally appear as widely dispersed relatively small particles in the matrix of the composition.

3. A composition as claimed in Claim 1 or Claim 2 characterised in that the falling weight impact strength measured as described in this application is increased by at least about 1/3 in contrast to the use of a single rubbery additive.

4. A composition as claimed in Claim 1, Claim 2 or Claim 3 characterised in that the vinyl aromatic monomer of the non-equimolar copolymer (1) comprises styrene.

5. A composition as claimed in any one of Claims 1 to 4 characterised in that the dicarboxylic acid or anhydride or imide thereof comprises maleic anhydride.

6. A composition as claimed in any one of claims 1 to 5 wherein the second copolymer comprises a radial block copolymer of about 75% by weight of styrene and about 25% by weight butadiene.

7. A composition as claimed in any one of claims 1 to 6 characterised in that said non-equimolar copolymer (1) is formed by a continuous and free radical type polymerization.

8. A method of making a thermoplastic composition as, defined in claim 1 useful for molding, extrusion and thermoforming by polymerizing an aromatic vinyl monomer and an ethylenically unsaturated dicarboxylic acid, or anhydride or imide thereof, to form a non-equimolar copolymer in the presence of rubbery material characterised in that said rubbery material comprises 5 to 20% by weight, based on total composition, of a first additive comprising at least one high conjugated diene-vinyl aromatic monomer copolymer comprising 60 to 98% by weight of conjugated diene and 2 to 20% by weight, based on total composition, of a second additive comprising at least one high vinyl aromatic monomer-conjugated diene copolymer which is a block copolymer containing a greater amount of vinyl aromatic monomer than conjugated diene monomer.

9. A method as claimed in Claim 8 characterised in that said additives are precipitated as relatively small particles interspersed throughout the matrix of the polymerized monomers in the resultant product.

10. A method as claimed in Claim 8 or Claim 9, characterised in that the total quantity of said additives is up to 40% by weight of the final product.

11. A method as claimed in Claim 8, 9 or 10, characterised in that the vinyl aromatic monomer employed to form the non-equimolar copolymer comprises styrene.

12. A method as claimed in any one of Claim 8 to 11, characterised in that the dicarboxylic acid, or anhydride or imide thereof, comprises maleic anhydride.

13. A method as claimed in any one of Claims 8 to 12, characterised in that the second additive comprises a radial block copolymer of about 75% by weight of styrene and about 25% by weight butadiene.

14. A method as claimed in any one of Claims 8 to 13, characterised in that said additives precipitate from the mixture during polymerization as relatively small particles which become interspersed throughout the polymerized product.

**Patentansprüche**

1. Thermoplastische, gummimodifizierte Vinyl-aromatische Polymerzusammensetzung zum Preßformen, Extrudieren und Wäremverformen, erhalten durch Bildung eines Copolymers aus einem Vinyl-aromatischen Monomer und einem damit copolymerisierbaren ethylenisch ungesättigten Dicarbonsäureanteil in Gegenwart eines gummiartigen Materials, dadurch gekennzeichnet, daß die Zusammensetzung enthält:

(1) 60 bis 93 Gew.-% eines nicht äquimolaren Copolymers aus 70 bis 98 Gew.-% des Vinyl-aromatischen Monomers und 2 bis 30 Gew.-% einer ethylenisch ungesättigten Dicarbonsäure oder deren Anhydrid oder deren Imid und

(2) 7 bis 40 Gew.-% des gummiartigen Materials, bestehend aus 5 bis 20 Gew.-% bezogen auf die Gesamtzusammensetzung, zumindest einem hochkonjugierten Dien-Vinyl-aromatischen Monomer, einem ersten Compolymer, enthaltend 60 bis 98 Gew.-% konjugiertes Dien und 2 bis 20 Gew.-%, bezogen auf die gesamte Zusammensetzung, zumindest einem Hoch-Vinyl-aromatischen Monomer-konjugiertes Dien und einem zweiten Copolymer, das ein Block-Copolymer ist, das eine größere Menge Vinyl-aromatisches Monomer als konjugiertes Dien-Monomer enthält.

2. Zusammensetzung nach Anspruch 1, dadurch gekennzeichnet, daß die gummiartigen Zusatzmaterialien weit verstreut als relativ kleine Teilchen in der Matrix der Zusammensetzung vorliegen.

3. Zusammensetzung nach Anspruch 1 oder 2, dadurch gekennzeichnet, daß der Fallgewicht-Stoßfestigkeitswert, wie in dieser Anmeldung gemessen, mindestens um etwa 1/3, im Gegensatz zur Verwendung eines einzelnen gummiartigen Zusatzmaterials, erhöht ist.

4. Zusammensetzung nach Anspruch 1 bis 3, dadurch gekennzeichnet, daß das Vinyl-aromatische Monomer des nicht-äquimolaren Copolymers (1) Styrol enthält.

5. Zusammensetzung nach Anspruch 1 bis 4, dadurch gekennzeichnet, daß die Dicarbonsäure oder deren Anhydrid oder deren Imid Maleinsäure enthält.

6. Zusammensetzung nach Anspruch 1 bis 5, worin das zweite Copolymer ein Radial-Block-Copolymer aus etwa 75 Gew.-% Styrol und etwa 25 Gew.-% Butadien enthält.

7. Zusammensetzung nach Anspruch 1 bis 6, dadurch gekennzeichnet, daß das nicht-äquimolare Copolymer (1) durch eine kontinuierliche Polymerisation des freien Radikaltyps gebildet wird.

8. Verfahren zur Herstellung einer thermoplastischen Zusammensetzung, wie in Anspruch 1 definiert, zum Pressen, Extrudieren und Wärmeverformen durch Polymerisation eines aromatischen Vinylmonomers und einer ethylenisch ungesättigten Dicarbonsäure oder deren Anhydrid oder deren Imid zur Bildung eines nicht-äquimolaren Copolymers in Gegenwart eines gummiartigen Materials, dadurch gekennzeichnet, daß das gummiartige Material aus 5 bis 20 Gew.-%, bezogen auf die gesamte Zusammensetzung, einem ersten Zusatzmittel, enthaltend zumindest ein hoch-konjugiertes Dien-Vinyl-aromatisches Monomer-Copolymer, enthaltend 60 bis 98 Gew.-% konjugiertes Dien und aus 2 bis 20 Gew.-%, bezogen auf die gesamte Zusammensetzung, einem zweiten Zusatzmittel, enthaltend zumindest ein Hoch-Vinyl-aromatisches Monomer-konjugiertes Dien-Copolymer, das ein Block-Copolymer ist, enthaltend eine größere Menge Vinyl-aromatisches Monomer als konjugiertes Dien-Monomer, besteht.

9. Verfahren nach Anspruch 8, dadurch gekennzeichnet, daß die Zusatzmittel als relativ kleine Teilchen, verteilt in der Matrix der polymerisierten Monomere im erhaltenen Produkt, präzipitiert werden.

10. Verfahren nach Anspruch 8 oder 9, dadurch gekennzeichnet, daß die Gesamtmenge der Zusatzmittel bis zu 40 Gew.-% des Endproduktes beträgt.

11. Verfahren nach Anspruch 8, 9 oder 10, dadurch gekennzeichnet, daß das zur Bildung des nicht-äquimolaren Copolymers verwendete Vinyl-aromatische Monomer Styrol enthält.

12. Verfahren nach Anspruch 8 bis 11, dadurch gekennzeichnet, daß die Dicarbonsäure oder deren Anhydrid oder deren Imid Maleinsäure-Anhydrid enthält.

13. Verfahren nach Anspruch 8 bis 12, dadurch gekennzeichnet, daß das zweite Zusatzmittel ein Radial-Block-Copolymer aus etwa 75 Gew.-% Styrol und etwa 25 Gew.-% Butadien enthält.

14. Verfahren nach Anspruch 8 bis 13, dadurch gekennzeichnet, daß die Zusatzmittel aus der Mischung während der Polymerisation als relativ kleine Teilchen, die über das gesamte polymerisierte Produkt verteilt werden, präzipitieren.

**Revendications**

1. Composition thermoplastique de polymère aromatique vinylique modifiée par un caoutchouc utile pour le moulage, l'extrusion et le thermoformage et obtenue par formation d'un copolymère d'un monomère aromatique vinylique et d'une partie acide dicarboxylique insaturé éthyléniquement copolymérisable avec celui-là, en présence d'une matière caoutchouteuse, caractérisée en ce que la composition comprend:

(1) de 60 à 93% en poids d'un copolymère non-équimolaire de 70 à 98% en poids de ce monomère aromatique vinylique et de 2 à 30% en poids d'acide dicarboxylique insaturé éthyléniquement, ou de l'anhydride ou de l'imide de celui-ci, et

(2) de 7 à 40% en poids de cette matière caoutchouteuse, comprenant de 5 à 20% en poids, par rapport à la composition totale, d'au moins un premier haut copolymère de diène conjugué-monomère aromatique vinylique comprenant 60 à 98% en poids de diène conjugué, et de 2 à 20% en poids, par rapport à la composition totale, d'au moins un second haut copolymère de monomère aromatique vinyliquediène conjugué, qui est un copolymère à blocs contenant une plus grande quantité de monomère aromatique vinylique que de monomère de type diène conjugué.

2. Composition suivant la revendication 1, caractérisée en ce que les additifs caoutchouteux apparaissent en général sous forme de particules relativement petites largement dispersées dans la matrice de la composition.

3. Composition suivant la revendication 1 ou la revendication 2, caractérisée en ce que la résistance au choc exercé par un poids qui tombe, mesurée de la façon indiquée dans cette Demande, est augmentée d'au moins 1/3 environ par rapport à ce qu'on obtient en utilisant un seul additif caoutchouteux.

4. Composition suivant la revendication 1, la revendication 2 ou la revendication 3, caractérisée en ce que le monomère aromatique vinylique du copolymère (1) non-équimolaire, comprend le styrène.

5. Composition suivant l'une quelconque des revendications 1 à 4, caractérisée en ce que l'acide dicarboxylique, ou l'anhydride ou l'imide de celui-ci, comprend l'anhydride moléique.

6. Composition suivant l'une quelconque des revendications 1 à 5, dans laquelle le second copolymère comprend un copolymère à blocs en étoile d'environ 75% en poids de styrène et d'environ 25% en poids de styrène et d'environ 25% en poids de butadiène.

7. Composition suivant l'une quelconque des revendications 1 à 6, caractérisée en ce que copolymère (1) non-équimolaire est formé par une polymérisation en continu du type à radicaux libres.

8. Procédé de préparation d'une composition thermoplastique suivant la revendication 1 utile pour le moulage l'extrusion et le thermoformage, par polymérisation d'un monomère vinylique aromatique et d'un acide dicarboxylique insaturé éthyléniquement ou de l'anhydride ou de l'imide de celui-ci, pour former un copolymère non-équimolaire en présence d'une matière caoutchouteuse, caractérisé en ce que cette matière caoutchouteuse comprend 5 à 20% en poids, par rapport à la composition totale, d'un premier additif comprenant au moins un haut copolymère de diène conjugué- monomère aromatique vinylique comprenant 60 à 98% en poids de diène conjugué et 2 à 20% en poids par rapport à la composition totale, d'un second additif comprenant au moins un haut copolymère de monomère aromatique vinyliquediène conjugué, qui est un copolymère à blocs contenant une plus grande quantité de monomère aromatique vinylique que de monomère de type diène conjugué.

9. Procédé suivant la revendication 8, caractérisé en ce que ces additifs sont précipités sous forme de particules relativement petites dispersées dans la matrice des monomères polymérisés dans le produit résultant.

10. Procédé suivant la revendication 8 ou la revendication 9, caractérisé en ce que la quantité totale de ces additifs va jusqu'à 40% en poids du produit final.

11. Procédé suivant les revendications 8, 9 ou 10, caractérisé en ce que le monomère aromatique vinylique employé pour former le copolymère non-équimolaire comprend le styrène.

12. Procédé suivant l'une quelconque des revendications 8 à 11, caractérisé en ce que l'acide dicarboxylique, ou l'anhydride ou l'imide de celui-ci, comprend l'anhydride maléique.

13. Procédé suivant l'une quelconque des revendications 8 à 12 caractérisé en ce que le second additif comprend un copolymère à blocs en étoile d'environ 75% en poids de styrène et d'environ 25% en poids de butadiène.

14. Procédé suivant l'une quelconque des revendications 8 à 13, caractérisé en ce que ces additifs précipitent à partir du mélange pendant la polymérisation sous forme de particules relativement petites qui sont ainsi dispersées dans le produit polymérisé.